# EUROPEAN PATENT APPLICATION

(11) **EP 3 392 489 A1**
(43) Date of publication of application: **24.10.2018**
(21) Application number: 18168046.3
(22) Date of filing: 18.04.2018
(51) Int. Cl.: F02D 41/12, F02D 15/04

(54) **CONTROL SYSTEM OF VEHICLE**

(30) Priority: 18.04.2017 JP 2017082239
(71) Applicant: Toyota Jidosha Kabushiki Kaisha, Aichi-Ken 471-8571 (JP)
(72) Inventor: YAMASHITA, Yoshiyuki, Aichi-Ken, 471-8571 (JP)
(74) Representative: D Young & Co LLP

(57) **Abstract**

The control system of a vehicle comprises: a variable compression ratio mechanism A able to change a mechanical compression ratio of an internal combustion engine 2 provided in the vehicle 1, 1', 1"; a compression ratio control part 31 configured to control the mechanical compression ratio by the variable compression ratio mechanism; and a slope detection device 41 detecting a slope of a road on which the vehicle is driving. The compression ratio control part is configured to control the mechanical compression ratio based on the slope detected by the slope detection device when fuel cut control in which feed of fuel to combustion chambers of the internal combustion engine is stopped is being performed.

## Description

### TECHNICAL FIELD

The present invention relates to a control system of a vehicle.

### BACKGROUND ART

In the past, it was known to stop the feed of fuel to the combustion chambers of an internal combustion engine as "fuel cut control". In the hybrid vehicle described in PLT 1, if the vehicle is decelerated when the battery is charged to a high level, the motor-generator is used to drive operation of the internal combustion engine in a "motoring operation". In the motoring operation, fuel cut control is performed in the internal combustion engine.

When fuel cut control is being performed, the higher mechanical compression ratio of the internal combustion engine, the larger the pumping loss and the stronger the engine brake action on the vehicle. For this reason, in the hybrid vehicle described in PLT 1, to obtain the desired deceleration torque, during fuel cut control, a variable compression ratio mechanism is used to control the mechanical compression ratio to the high compression ratio side.

### Citation List

### Patent Literature

PLT 1. Japanese Patent Publication No. 2016-117451A

### SUMMARY OF INVENTION

### Technical Problem

In this regard, the acceleration of the vehicle during fuel cut control depends on the slope of the road on which the vehicle is driving. However, in the hybrid vehicle described in PLT 1, during fuel cut control, the mechanical compression ratio is controlled uniformly to the high compression ratio side. The slope of the road on which the vehicle is driving is not considered at all. For this reason, even if it were possible to suppress acceleration of the vehicle when the road is a downward slope, if the road is an upward slope, the vehicle rapidly decelerates. Therefore, the fluctuation in acceleration of the vehicle during fuel cut control becomes greater according to the slope of the road and the drivability of the vehicle deteriorates.

Further, if fuel cut control ends, the vehicle is accelerated due to the drive force of the internal combustion engine or motor generator, so torque fluctuation occurs. If the fluctuation of acceleration of the vehicle in fuel cut control is large, the variation in torque fluctuation when the fuel cut control ends becomes larger and the drivability of vehicle deteriorates.

Therefore, in consideration of the above problem, the object of the present invention is to provide a control system of a vehicle able to improve the drivability of a vehicle provided with an internal combustion engine where fuel cut control is performed.

### Solution to Problem

The summary of the present disclosure is as follows.
(1) A control system of a vehicle comprising: a variable compression ratio mechanism able to change a mechanical compression ratio of an internal combustion engine provided in the vehicle; a compression ratio control part configured to control the mechanical compression ratio by the variable compression ratio mechanism; and a slope detection device detecting a slope of a road on which the vehicle is driving, wherein the compression ratio control part is configured to control the mechanical compression ratio based on the slope detected by the slope detection device when fuel cut control in which feed of fuel to combustion chambers of the internal combustion engine is stopped is being performed.
(2) The control system of a vehicle described in above (1), wherein the compression ratio control part is configured to minimize the mechanical compression ratio if the slope detected by the slope detection device is positive.
(3) The control system of a vehicle described in above (1) or (2), wherein the compression ratio control part is configured to maximize the mechanical compression ratio if the slope detected by the slope detection device is smaller than a predetermined negative reference value.
(4) The control system of a vehicle described in any one of above (1) to (3), further comprising: a target acceleration setting part configured to set a target acceleration of the vehicle based on the slope detected by the slope detection device; and an acceleration detection device detecting an acceleration of the vehicle, wherein the compression ratio control part is configured to control the mechanical compression ratio so that when the fuel cut control is being performed, the acceleration of the vehicle detected by the acceleration detection device approaches the target acceleration.
(5) The control system of a vehicle described in above (4), wherein the target acceleration setting part is configured to increase the target acceleration the smaller the slope if the slope detected by the slope detection device is negative.
(6) The control system of a vehicle described in above (4) or (5), wherein the target acceleration setting part is configured to set the target acceleration to a positive predetermined value if the slope detected by the slope detection device is positive.
(7) The control system of a vehicle described in any one of above (4) to (6), further comprising a brake operation detection device detecting a brake operation of a driver of the vehicle, wherein the target acceleration setting part is configured to change the target acceleration when the slope is negative based on a brake operation detected by the brake operation detection device when the fuel cut control is being performed and the slope is in a predetermined negative medium slope region.

### Advantageous Effects of Invention

According to the present invention, there is provided a control system of a vehicle able to improve the drivability of a vehicle provided with an internal combustion engine where fuel cut control is performed.

### BRIEF DESCRIPTION OF DRAWINGS

[FIG. 1] FIG. 1 is a block diagram schematically showing the configuration of a vehicle to which a control system of a vehicle according to a first embodiment of the present invention is applied.
[FIG. 2] FIG. 2 is a schematic side cross-sectional view of an internal combustion engine.
[FIG. 3] FIG. 3 is a disassembled perspective view of a variable compression ratio mechanism.
[FIG. 4A] FIG. 4A is a side cross-sectional view of a diagrammatically represented internal combustion engine.
[FIG. 4B] FIG. 4B is a side cross-sectional view of a diagrammatically represented internal combustion engine.
[FIG. 5] FIG. 5 is a map showing a relationship of a slope of a driven road and a target mechanical compression ratio.
[FIG. 6] FIG. 6 is a flow chart showing a control routine of processing for setting a mechanical compression ratio in a first embodiment of the present invention.
[FIG. 7] FIG. 7 is a block diagram schematically showing a configuration of a vehicle to which a control system of a vehicle according to a second embodiment of the present invention is applied.
[FIG. 8] FIG. 8 is a map showing a relationship of a slope of a driven road and a target acceleration.
[FIG. 9] FIG. 9 is a flow chart showing a control routine of processing for setting a mechanical compression ratio in a second embodiment of the present invention.
[FIG. 10] FIG. 10 is a block diagram schematically showing a configuration of a vehicle to which a control system of a vehicle according to a third embodiment of the present invention is applied.
[FIG. 11] FIG. 11 is a flow chart showing a control routine of processing for setting a target acceleration in a third embodiment of the present invention.
[FIG. 12] FIG. 12 is a map showing a relationship of a slope of a driven road and a target acceleration.

### DESCRIPTION OF EMBODIMENTS

Below, referring to the drawings, embodiments of the present invention will be explained in detail. Note that in the following explanations, similar component elements will be assigned the same reference numerals.

### First Embodiment

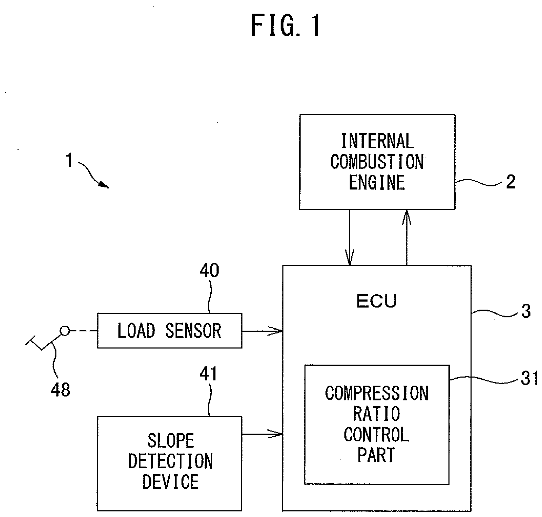

First, referring to FIG. 1 to FIG. 6, a first embodiment of the present invention will be explained.

### Explanation of Vehicle as Whole

FIG. 1 is a block diagram schematically showing the configuration of a vehicle 1 to which a control system of a vehicle according to a first embodiment of the present invention is applied. The vehicle 1 is provided with an internal combustion engine 2 driving the vehicle 1 and an electronic control unit (ECU) 3. Details of the internal combustion engine 2 will be explained later.

The ECU 3 is a microcomputer provided with a central processing unit (CPU), a memory such as a read only memory (ROM) and random access memory (RAM), an input port, an output port, etc. The ECU 3 controls various actuators of the internal combustion engine 2 based on outputs of various types of sensors. In the present embodiment, a single ECU 3 is provided, but a plurality of ECUs may be provided for each function.

Further, the vehicle 1 is provided with sensors detecting the state of the vehicle 1 or the surrounding environment of the vehicle 1. Specifically, the vehicle 1 is provided with a load sensor 40 and a slope detection device 41. The load sensor 40 and slope detection device 41 are connected to the ECU 3. The outputs of the load sensor 40 and slope detection device 41 are sent to the ECU 3 and input to the input port of the ECU 3.

The load sensor 40 is connected to an accelerator pedal 48 provided at the vehicle 1 and detects the amount of depression of the accelerator pedal 48. The accelerator pedal 48 is operated by the driver of the vehicle 1.

The slope detection device 41 detects the slope of the road on which the vehicle 1 is driving (below, referred to as the "driven road"). The slope detection device 41 is, for example, a G sensor able to detect a slant of the vehicle 1. Note that, the slope detection device 41 may be a GPS sensor. In this case, the slope of the road is calculated based on the altitude of the vehicle 1 detected by the GPS sensor. Further, if map information including information on the slope of the road is stored in a navigation system etc., of the vehicle 1, the slope of the road may be calculated based on this map information and position information of the vehicle 1 detected by the GPS sensor. Further, the slope detection device 41 may be an outside camera capturing the road in front of the vehicle 1. In this case, the slope of the road is calculated based on the position information of the vehicle 1 detected by the outside camera and map information including information on the slope of the road. Further, as the slope detection device 41, the above-mentioned sensors may be jointly used.

### Internal Combustion Engine

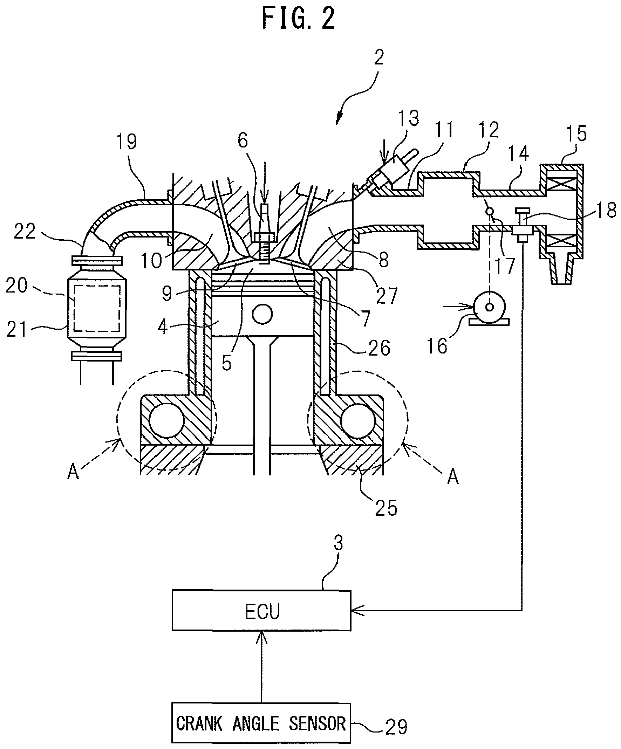

Below, the internal combustion engine 2 will be explained. FIG. 2 is a schematic side cross-sectional view of the internal combustion engine 2. In the present embodiment, the internal combustion engine 2 is a spark ignition type internal combustion engine (gasoline engine). The internal combustion engine 2 is provided with a crankcase 25, cylinder block 26, and cylinder head 27. At the inside of the cylinder block 26, pistons 4 moving back and forth inside of the cylinder block 26 are arranged. The internal combustion engine 2 has a plurality of cylinders. In the present embodiment, there are four cylinders.

The combustion chambers 5 are formed for the cylinders between the pistons 4 and cylinder head 27. The cylinder head 27 is formed with intake ports 8 and exhaust ports 10. The intake ports 8 and exhaust ports 10 are connected to the combustion chambers 5. Intake valves 7 are arranged at the end parts of the intake ports 8 and are formed to be able to open and close the intake ports 8. Exhaust valves 9 are arranged at the end parts of the exhaust ports 10 and are formed to be able to open and close the exhaust ports 10.

The internal combustion engine 2 is provided with fuel injectors 13 supplying fuel to the combustion chambers 5 and spark plugs 6 igniting the air-fuel mixture in the combustion chambers 5. The fuel injectors 13 are arranged in the vicinities of the intake ports 8 so as to inject fuel into the intake ports 8. That is, the internal combustion engine 2 is a port injection type internal combustion engine. Note that, the internal combustion engine 2 may be a cylinder injection type internal combustion engine. In this case, the fuel injectors 13 are arranged in the vicinity of the inside wall surface of the cylinder head 27 so as to directly inject fuel into the combustion chambers 5. Further, the internal combustion engine 2 uses gasoline with a stoichiometric air-fuel ratio of 14.6 as the fuel. However, in the internal combustion engine 2, another fuel may be used.

The intake ports 8 of the cylinders are respectively connected through corresponding intake runners 11 to a surge tank 12. The surge tank 12 is connected through the intake pipe 14 to an air-cleaner 15. The intake ports 8, intake runners 11, intake pipe 14, etc., form an intake passage introducing air into the combustion chambers 5.

Inside of the intake pipe 14 between the surge tank 12 and the air cleaner 15, a throttle valve 17 driven by a throttle valve drive actuator 16 is arranged. The throttle valve 17 is turned by the throttle valve drive actuator 16 whereby it is possible to change the open area of the intake passage and change the amount of intake air.

On the other hand, the exhaust ports 10 of the cylinders are connected through an exhaust manifold 19 and exhaust pipe 22 to a casing 21. The casing 21 contains an exhaust purification catalyst 20. The exhaust purification catalyst 20 is for example a three-way catalyst. The exhaust ports 10, exhaust manifold 19, exhaust pipe 22, etc., form an exhaust passage discharging exhaust gas generated by combustion of the air-fuel mixture from the combustion chambers 5.

The internal combustion engine 2 is provided with various types of sensors for detecting the operating states of the internal combustion engine 2. The various sensors are connected to the ECU 3. For example, the internal combustion engine 2 is provided with an air-flow meter 18 for detecting the amount of intake air. The air-flow meter 18 is arranged at the inside of the intake pipe 14 at the upstream side from the throttle valve 17. The output of the air-flow meter 18 is sent to the ECU 3 and input to the input port of the ECU 3. Further, the internal combustion engine 2 is provided with a crank angle sensor 29 for detecting the engine speed. The crank angle sensor 29, for example, generates an output pulse every time the crankshaft of the internal combustion engine rotates 15°.

The spark plugs 6, fuel injectors 13, and throttle valve drive actuator 16 are connected to the ECU 3. The ECU 3 controls the ignition timings of the spark plugs 6, the injection timings and ignition amounts of the fuel injectors 13, and the opening degree of the throttle valve 17.

### Variable Compression Ratio Mechanism

Further, the internal combustion engine 2 is provided with a variable compression ratio mechanism A able to change a mechanical compression ratio of the internal combustion engine 2. The variable compression ratio mechanism A is connected to the ECU 3. The ECU 3 uses the variable compression ratio mechanism A to control the mechanical compression ratio. The variable compression ratio mechanism A is provided at the connecting part of the crankcase 25 and cylinder block 26. The variable compression ratio mechanism A changes the relative position between the crankcase 25 and the cylinder block 26 in the cylinder axial direction to change the volumes of the combustion chambers 5 when the pistons 4 are positioned at compression top dead center and thereby change the mechanical compression ratio of the internal combustion engine 2.

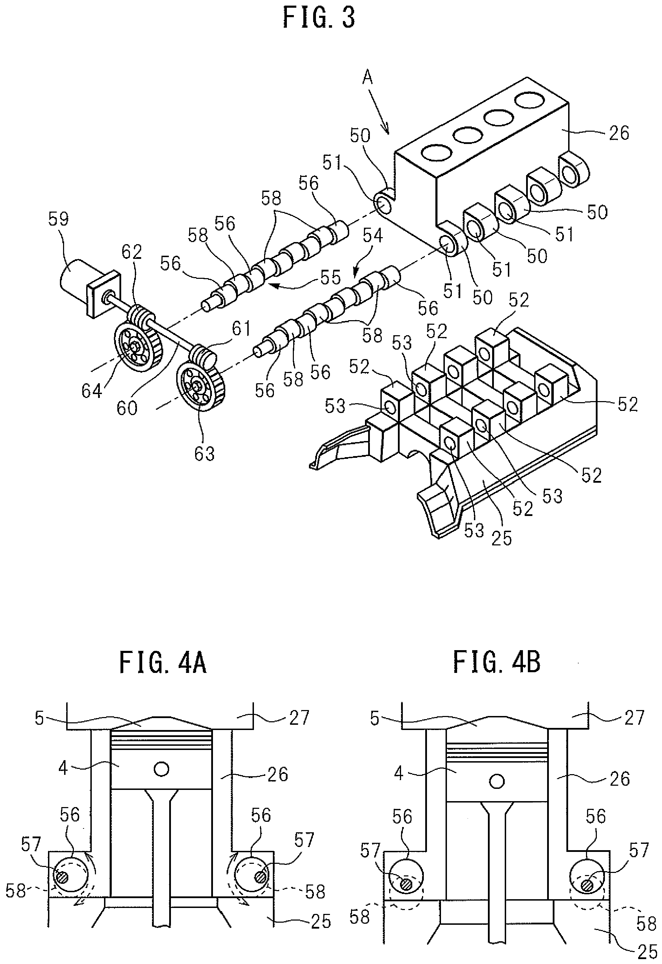

FIG. 3 is a disassembled perspective view of the variable compression ratio mechanism A shown in FIG. 2. FIG. 4 is a side cross-sectional view of the diagrammatically represented internal combustion engine 2. Referring to FIG. 3, at the bottoms of the both side walls of the cylinder block 26, a plurality of projecting parts 50 separated by intervals from each other are formed. Inside the projecting parts 50, circular cross-section cam insertion holes 51 are formed. On the other hand, on the top wall surface of the crankcase 25, a plurality of projecting parts 52 which are fit between corresponding projecting parts 50 are formed separated by intervals from each other. Inside the projecting parts 52, circular cross-section cam insertion holes 53 are formed.

As shown in FIG. 3, a pair of camshafts 54 and 55 are provided. On the camshafts 54 and 55, circular cams 56 are fixed inserted to be able to rotate inside every other of the cam insertion holes 51. These circular cams 56 are coaxial with the rotational axes of the camshafts 54 and 55. On the other hand, between the circular cams 56, as shown by the hatching in FIG. 4, eccentric shafts 57 extend arranged eccentrically with respect to the rotational axes of the camshafts 54 and 55. On the eccentric shafts 57, separate circular cams 58 are attached to be able to rotate eccentrically. As shown in FIG. 3, these circular cams 58 are arranged between the circular cams 56. These circular cams 58 are inserted to be able to rotate in the corresponding cam insertion holes 53.

If making the circular cams 56 fixed on the camshafts 54 and 55 rotate from the state shown in FIG. 4A in opposite directions from each other as shown by the solid line arrows in FIG. 4A, the eccentric shafts 57 move downward toward the center, so the circular cams 58 rotate in an opposite direction to the circular cams 56 inside the cam insertion holes 53 as shown by the broken line arrows in FIG. 4A. If the eccentric shafts 57 move downward toward the center as shown in FIG. 4B, the centers of the circular cams 58 move to below the eccentric shafts 57.

As will be understood from a comparison of FIG. 4A and FIG. 4B, the relative position of the crankcase 25 and the cylinder block 26 is determined by the distance between the center of the circular cams 56 and the center of the circular cams 58. The larger the distance between the center of the circular cams 56 and the center of the circular cams 58, the more the cylinder block 26 separates from the crankcase 25. If the cylinder block 26 separates from the crankcase 25, the volume of the combustion chamber 5 when the piston 4 is positioned at the compression top dead center increases. On the other hand, if the cylinder block 26 approaches the crankcase 25, the volume of the combustion chamber 5 when the piston 4 is positioned at the compression top dead center decreases. Therefore, by rotating the camshafts 54 and 55, it is possible to change the volume of the combustion chamber 5 when the piston 4 is positioned at the compression top dead center and it is possible to linearly (continuously) change the mechanical compression ratio of the internal combustion engine 2.

As shown in FIGS. 4A and 4B, in order to rotate the camshafts 54 and 55 in opposite directions from each other, a pair of worm gears 61 and 62 with opposite spiral directions are attached to the shaft of the drive motor 59. The gears 63 and 64 meshing with these worm gears 61 and 62 are fastened to the ends of the camshafts 54 and 55. In the present embodiment, by driving the drive motor 59, the volume of the combustion chamber 5 when the piston 4 is positioned at the compression top dead center can be changed over a broad range.

### Fuel Cut Control

In the present embodiment, if a predetermined condition is satisfied, the feed of fuel to the combustion chambers 5 of the internal combustion engine 2 is stopped as fuel cut control. For example, the fuel cut control is performed when the amount of depression of the accelerator pedal 48 is zero or substantially zero (that is, the engine load is zero or substantially zero) and the engine speed is equal to or higher than a predetermined speed higher than the speed during idling.

If the fuel cut control is performed, air flows into the cylinders of the internal combustion engine 2 and air is discharged from the cylinders into the exhaust passage. For this reason, during the fuel cut control, the internal combustion engine 2 is driven by the rotational force of the car axle and there is an engine brake action on the vehicle 1. At this time, the higher the mechanical compression ratio of the internal combustion engine 2, the larger the pumping loss and the stronger the engine brake action on the vehicle 1.

Further, the acceleration of the vehicle 1 during the fuel cut control depends on the slope of the driven road. If the driven road is an upward slope, that is, the slope of the driven road is positive, the larger the slope, the smaller the acceleration of the vehicle 1. On the other hand, if the driven road is a downward slope, that is, the slope of the driven road is negative, the smaller the slope (the larger the absolute value of the slope), the larger the acceleration of the vehicle 1. For this reason, if setting the mechanical compression ratio during the fuel cut control uniformly regardless of the slope of the driven road, the fluctuation of the acceleration of the vehicle 1 during the fuel cut control becomes greater and the drivability of the vehicle 1 deteriorates.

### Control system of Vehicle

In the present embodiment, to bring the acceleration of the vehicle 1 during the fuel cut control to a suitable value, when the fuel cut control is being performed, the mechanical compression ratio of the internal combustion engine 2 is controlled based on the slope of the driven road. The control system of a vehicle according to the present embodiment is provided with the variable compression ratio mechanism A, slope detection device 41, and compression ratio control part 31. In the present embodiment, as shown in FIG. 1, the ECU 3 functions as a compression ratio control part 31.

The compression ratio control part 31 uses the variable compression ratio mechanism A to control the mechanical compression ratio of the internal combustion engine 2. Specifically, the compression ratio control part 31 controls the mechanical compression ratio of the internal combustion engine 2 based on the slope of the driven road detected by the slope detection device 41 when the fuel cut control is being performed. Note that, when fuel cut control is not being performed, the compression ratio control part 31 controls the mechanical compression ratio according to the operating state of the internal combustion engine 2 etc.

Due to the above-mentioned control, the mechanical compression ratio of the internal combustion engine 2 is controlled to a value corresponding to the slope of the driven road, so the strength of the engine brake action on the vehicle 1 is optimized. As a result, the acceleration of the vehicle 1 during the fuel cut control can be made to approach a suitable value and the drivability of the vehicle 1 can be improved.

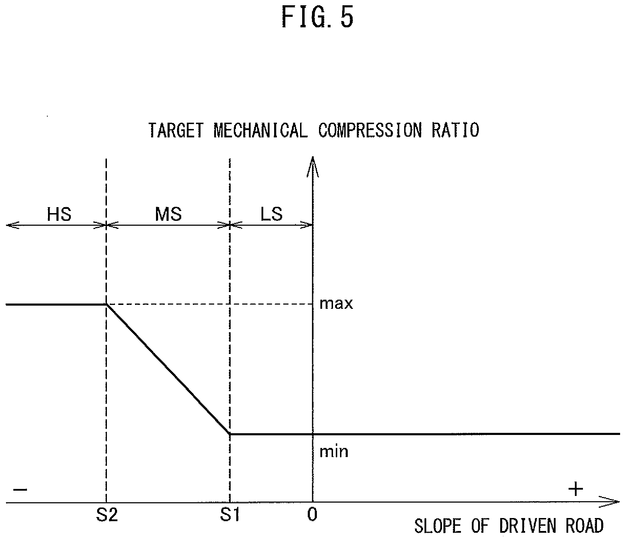

For example, the compression ratio control part 31 uses a map such as shown in FIG. 5 to control the mechanical compression ratio. FIG. 5 is a map showing the relationship between the slope of the driven road and the target mechanical compression ratio. The map is stored in the memory of the ECU 3.

The target mechanical compression ratio (target value of mechanical compression ratio) with respect to the slope of the driven road is determined in advance. If the slope of the driven road is positive, in order to weaken the engine brake action and keep the vehicle 1 from decelerating, the target mechanical compression ratio is made the minimum. Further, even if the slope of the driven road is negative, when the absolute value of the slope is small, air resistance causes the vehicle 1 to decelerate. For this reason, even if the slope of the driven road is in a negative low slope region LS, the target mechanical compression ratio is made the smallest. The negative low slope region LS is determined in advance and is the region between zero and the first slope S1. The first slope S1 is a predetermined negative value. Therefore, the compression ratio control part 31 makes the mechanical compression ratio smallest when the slope of the driven road detected by the slope detection device 41 is positive or in the negative low slope region LS. In other words, the compression ratio control part 31 makes the mechanical compression ratio smallest when the slope of the driven road detected by the slope detection device 41 is a negative first reference value (first slope S1) or more.

On the other hand, if the slope of the driven road is in a negative high slope region HS, the engine brake action is made stronger and the acceleration of the vehicle 1 is suppressed by the target mechanical compression ratio being made maximum. The negative high slope region HS is determined in advance and is the region less than the second slope S2. The second slope S2 is a predetermined negative value and is smaller than the first slope S1. Therefore, the compression ratio control part 31 makes the mechanical compression ratio maximum if the slope of the driven road detected by the slope detection device 41 is in the negative high slope region HS. In other words, the compression ratio control part 31 makes the mechanical compression ratio maximum if the slope of the driven road detected by the slope detection device 41 is smaller than the negative second reference value (second slope S2).

Further, if the slope of the driven road is in the negative medium slope region MS, the acceleration of the vehicle 1 is controlled to a suitable value by making the target mechanical compression ratio higher as the slope of the driven road becomes smaller. The negative medium slope region MS is determined in advance and a region between the first slope S1 and the second slope S2. Therefore, the compression ratio control part 31 raises the mechanical compression ratio more the smaller the slope of the driven road if the slope of the driven road detected by the slope detection device 41 is in the negative medium slope region MS. In other words, the compression ratio control part 31 raises the mechanical compression ratio more the smaller the slope of the driven road if the slope of the driven road detected by the slope detection device 41 is between the negative first reference value (first slope S1) and the negative second reference value (second slope S2).

By setting the target mechanical compression ratio as explained above, when the slope of the driven road is positive or in the negative low slope region LS or negative medium slope region MS, it is possible to keep the vehicle 1 from being excessively decelerated and extend the duration of the fuel cut control. For this reason, the fuel efficiency of the vehicle 1 can be improved. Further, by setting the target mechanical compression ratio as explained above, fluctuation of the acceleration of the vehicle 1 during the fuel cut control can be suppressed. For this reason, it is possible to improve the drivability of the vehicle 1.

### Processing For Setting Mechanical Compression Ratio

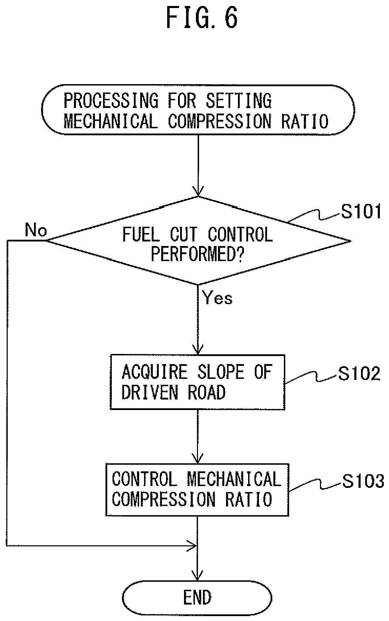

Below, referring to FIG. 6, the control for setting the mechanical compression ratio during the fuel cut control in the present embodiment will be explained. FIG. 6 is a flow chart showing a control routine of processing for setting the mechanical compression ratio in the first embodiment of the present invention. The present control routine is repeatedly performed by the ECU 3 at predetermined time intervals after startup of the internal combustion engine 2.

First, at step S101, the compression ratio control part 31 judges whether the fuel cut control is being performed. If it is judged that the fuel cut control is not being performed, the control routine is ended. In this case, the compression ratio control part 31 controls the mechanical compression ratio in accordance with the operating state of the internal combustion engine 2 etc. On the other hand, if it is judged that the fuel cut control is being performed, the present control routine proceeds to step S102.

At step S102, the compression ratio control part 31 acquires the slope of the driven road. The slope of the driven road is detected by the slope detection device 41. Next, at step S103, the compression ratio control part 31 uses the map such as shown in FIG. 5 to set the target mechanical compression ratio based on the slope of the driven road and controls the mechanical compression ratio to the target mechanical compression ratio by the variable compression ratio mechanism A. After step S103, the control routine is ended.

### Second Embodiment

The control system of a vehicle according to the second embodiment is basically the same in configuration and control as the control system of a vehicle according to the first embodiment except for the points explained below. For this reason, below, the second embodiment of the present invention will be explained focusing on parts different from the first embodiment.

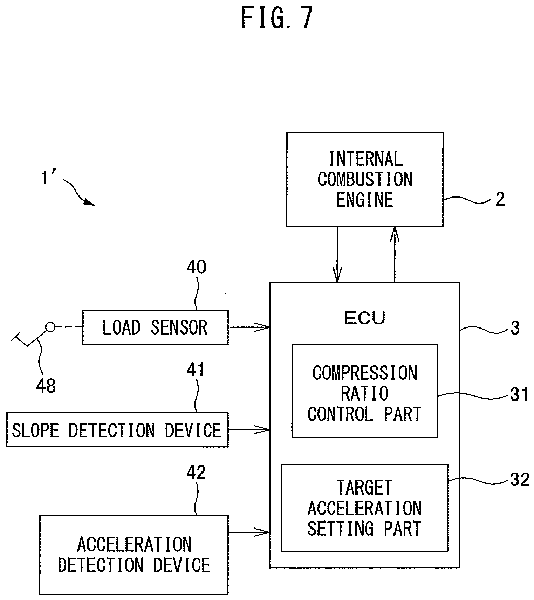

FIG. 7 is a block diagram schematically showing the configuration of a vehicle 1' to which the control system of a vehicle according to the second embodiment of the present invention is applied. In the second embodiment, as a sensor detecting the state of the vehicle 1', the vehicle 1' is provided with an acceleration detection device 42. The acceleration detection device 42 is connected to the ECU 3. The output of the acceleration detection device 42 is sent to the ECU 3 and input to the input port of the ECU 3.

The acceleration detection device 42 detects the acceleration of the vehicle 1'. The acceleration detection device 42, for example, is a vehicle speed sensor detecting the speed of the vehicle 1'. The acceleration of the vehicle 1' is calculated as the time change of the speed of the vehicle 1'. The vehicle speed sensor detects the speed of the vehicle 1' based on the rotational speed of the wheels of the vehicle 1'. Note that, the acceleration detection device 42 may be a GPS sensor able to detect the speed of the vehicle 1' from the position information of the vehicle 1' and the elapsed time. Further, as the acceleration detection device 42, a vehicle speed sensor and GPS sensor may be used together.

The control system of a vehicle according to the second embodiment is provided with a variable compression ratio mechanism A, slope detection device 41, acceleration detection device 42, compression ratio control part 31, and target acceleration setting part 32. In the present embodiment, as shown in FIG. 7, the ECU 3 functions as the compression ratio control part 31 and target acceleration setting part 32.

The target acceleration setting part 32 sets the target acceleration of the vehicle 1' based on the slope of the driven road detected by the slope detection device 41. Further, the compression ratio control part 31 controls the mechanical compression ratio so that the acceleration of the vehicle 1' detected by the acceleration detection device 42 approaches the target acceleration when fuel cut control is being performed. Note that, the compression ratio control part 31 controls the mechanical compression ratio in accordance with the operating state of the internal combustion engine 2 etc., when fuel cut control is not being performed.

In the second embodiment, the acceleration of the vehicle 1' is detected by the acceleration detection device 42, and the mechanical compression ratio is controlled so that the detected acceleration approaches the target acceleration according to the slope of the driven road. For this reason, by feedback control, the acceleration of the vehicle 1' during the fuel cut control can be made to approach the target acceleration and the drivability of the vehicle 1' can be improved much more.

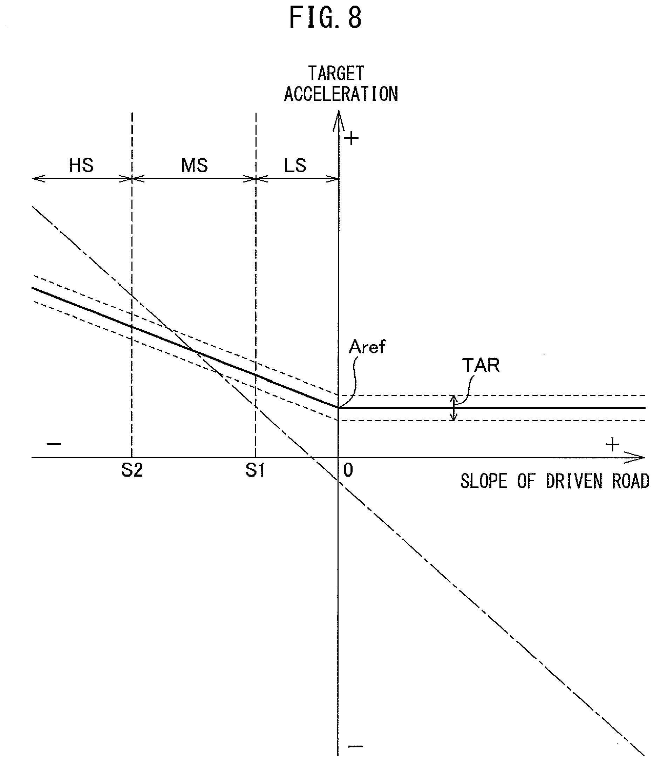

For example, the target acceleration setting part 32 uses a map such as shown in FIG. 8 to set the target acceleration. FIG. 8 is a map showing the relationship of the slope of the driven road and target acceleration. The map is stored in the memory of the ECU 3. For reference, FIG. 8 shows by a one-dot chain line the actual acceleration of the vehicle 1 obtained when the mechanical compression ratio is set at a medium extent of compression ratio.

The value of the target acceleration (target value of acceleration of vehicle 1') with respect to the slope of the driven road is determined in advance. The target acceleration setting part 32 suppress the deceleration of the vehicle 1' by setting the target acceleration to a positive predetermined value Aref if the slope of the driven road detected by the slope detection device 41 is positive. The target acceleration when the slope of the driven road is positive is constant regardless of the value of the slope.

On the other hand, if the slope of the driven road is negative, the driver of the vehicle 1' gets the sensation of the acceleration of the vehicle 1' becoming larger the smaller the slope (the larger the absolute value of the slope). For this reason, in order to prevent the driver from being made to feel odd, the target acceleration setting part 32 increases the target acceleration the smaller the slope if the slope of the driven road detected by the slope detection device 41 is negative. Note that, during the fuel cut control, in order to keep the acceleration of the vehicle 1' from greatly fluctuating according to the slope of the driven road, as shown in FIG. 8, the rate of change of the target acceleration with respect to the slope of the driven road is made smaller than the rate of change of the actual acceleration obtained when the mechanical compression ratio is maintained constant.

The compression ratio control part 31 lowers the mechanical compression ratio when the acceleration of the vehicle 1' detected by the acceleration detection device 42 is smaller than values of the target acceleration vicinity region TAR and raises the mechanical compression ratio when the acceleration of the vehicle 1' detected by the acceleration detection device 42 is larger than values of the target acceleration vicinity region TAR. The target acceleration vicinity region TAR is the region between the value of the target acceleration plus a predetermined value α and the value of the target acceleration minus the predetermined value α. The predetermined value α is determined in advance in order to suppress the compression ratio control part 31 from alternately repeating increase and decrease of the mechanical compression ratio.

### Processing for Setting Mechanical Compression Ratio

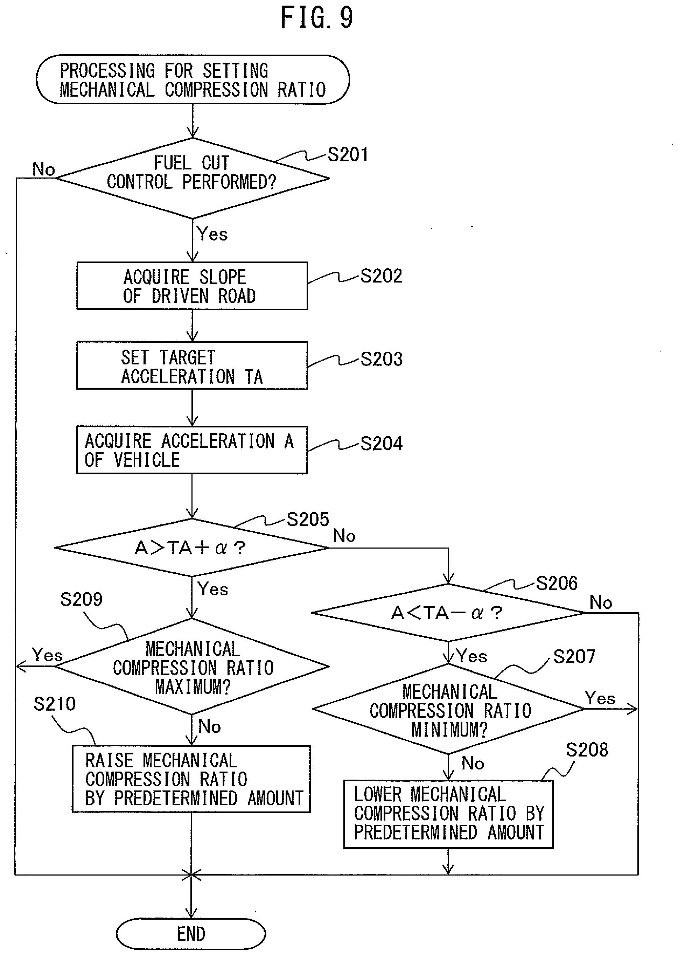

Below, referring to FIG. 9, the control for setting the mechanical compression ratio during the fuel cut control in the second embodiment will be explained. FIG. 9 is a flow chart showing a control routine of the processing for setting the mechanical compression ratio in the second embodiment of the present invention. The present control routine is repeatedly performed by the ECU 3 at predetermined time intervals after the startup of the internal combustion engine 2.

First, at step S201, the compression ratio control part 31 judges whether the fuel cut control is being performed. If it is judged that the fuel cut control is not being performed, the control routine is ended. In this case, the compression ratio control part 31 controls the mechanical compression ratio in accordance with the operating state of the internal combustion engine 2 etc. On the other hand, if it is judged that the fuel cut control is being performed, the present control routine proceeds to step S202.

At step S202, the target acceleration setting part 32 acquires the slope of the driven road. The slope of the driven road is detected by the slope detection device 41. Next, at step S203, the target acceleration setting part 32 uses the map such as shown in FIG. 8 to set the target acceleration TA based on the slope of the driven road.

Next, at step S204, the compression ratio control part 31 acquires the acceleration A of the vehicle 1'. The acceleration A is detected by the acceleration detection device 42. Next, at step S205, the compression ratio control part 31 judges whether the acceleration A is larger than the value of the target acceleration TA plus the predetermined value α. If the acceleration A is the value of the target acceleration TA plus the predetermined value α or less, the present control routine proceeds to step S206.

At step S206, the compression ratio control part 31 judges whether the acceleration A is smaller than the value of the target acceleration TA minus the predetermined value α. If the acceleration A is a value of the target acceleration TA minus a predetermined value α or more, the control routine is ended. On the other hand, if the acceleration A is smaller than the value of the target acceleration TA minus the predetermined value α, the present control routine proceeds to step S207.

At step S207, the compression ratio control part 31 judges whether the current mechanical compression ratio is the smallest. If the mechanical compression ratio is not the smallest, the present control routine proceeds to step S208. At step S208, the compression ratio control part 31 lowers the mechanical compression ratio by a predetermined amount. After step S208, the control routine is ended. On the other hand, if at step S207 the mechanical compression ratio is the smallest, the control routine is ended.

Further, if at step S205 the acceleration A is larger than the value of the target acceleration TA plus the predetermined value α, the present control routine proceeds to step S209. At step S209, the compression ratio control part 31 judges whether the current mechanical compression ratio is the maximum. If the mechanical compression ratio is not the maximum, the present control routine proceeds to step S210. At step S210, the compression ratio control part 31 raises the mechanical compression ratio by a predetermined amount. After step S210, the control routine is ended. On the other hand, if at step S209 the mechanical compression ratio is the maximum, the control routine is ended.

### Third Embodiment

The control system of a vehicle according to the third embodiment is basically the same in configuration and control as the control system of a vehicle according to the second embodiment except for the points explained below. For this reason, below, the third embodiment of the present invention will be explained focusing on parts different from the second embodiment.

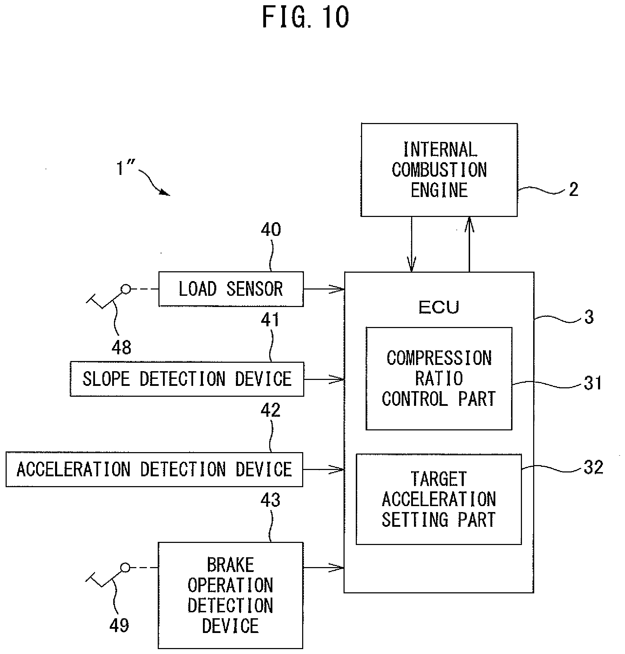

FIG. 10 is a block diagram schematically showing the configuration of the vehicle 1" to which the control system of a vehicle according to the third embodiment of the present invention is applied. In the third embodiment, as a sensor detecting the state of the vehicle 1", the vehicle 1" is provided with a brake operation detection device 43. The brake operation detection device 43 is connected to the ECU 3. The output of the brake operation detection device 43 is sent to the ECU 3 and is input to the input port of the ECU 3.

The brake operation detection device 43 is connected to a brake pedal 49 provided at the vehicle 1" and detects the brake operation of the driver. The brake pedal 49 is operated by the driver of the vehicle 1". The brake operation detection device 43 is, for example, a brake switch detecting whether or not the driver is stepping on the brake pedal 49.

The control system of a vehicle according to the third embodiment is provided with a variable compression ratio mechanism A, slope detection device 41, acceleration detection device 42, brake operation detection device 43, compression ratio control part 31, and target acceleration setting part 32. In the present embodiment, as shown in FIG. 10, the ECU 3 functions as the compression ratio control part 31 and target acceleration setting part 32.

The preferred acceleration of the vehicle 1" during the fuel cut control differs somewhat for each driver. Further, as will be understood from FIG. 8, when the slope of the driven road is in the negative medium slope region MS, it is possible to control the mechanical compression ratio to control the acceleration of the vehicle 1" to the inside of the target acceleration vicinity region TAR. For this reason, if the driver frequently operates the brake operation when the fuel cut control is performed and the slope of the driven road is in the negative medium slope region MS, it is considered that the driver does not like the setting of the target acceleration.

For this reason, in the third embodiment, the target acceleration setting part 32 changes the target acceleration of the vehicle 1" when the slope of the driven road is negative based on the brake operation detected by the brake operation detection device 43 when the fuel cut control is being performed and the slope of the driven road is in the negative medium slope region MS. Due to this, during the fuel cut control, it is possible to make the acceleration of the vehicle 1" approach the preference of the driver and possible to improve the drivability of the vehicle 1" much more.

Specifically, the target acceleration setting part 32 reduces the target acceleration of the vehicle 1" when the slope of the driven road is negative in the case where the frequency of the brake operation is relatively high compared with the case where the frequency of the brake operation is relatively low. For example, if the state in which the fuel cut control is performed and the slope of the driven road is in the negative medium slope region MS is maintained for a predetermined time, the target acceleration setting part 32 reduces the target acceleration when the number of times of the brake operation performed within the predetermined time is a first threshold value or more, and increases the target acceleration when the number of times of the brake operation performed within the predetermined time is a second threshold value or less. The first threshold value and the second threshold value are positive integers, and the first threshold value is larger than the second threshold value.

### Processing for Setting Target Acceleration

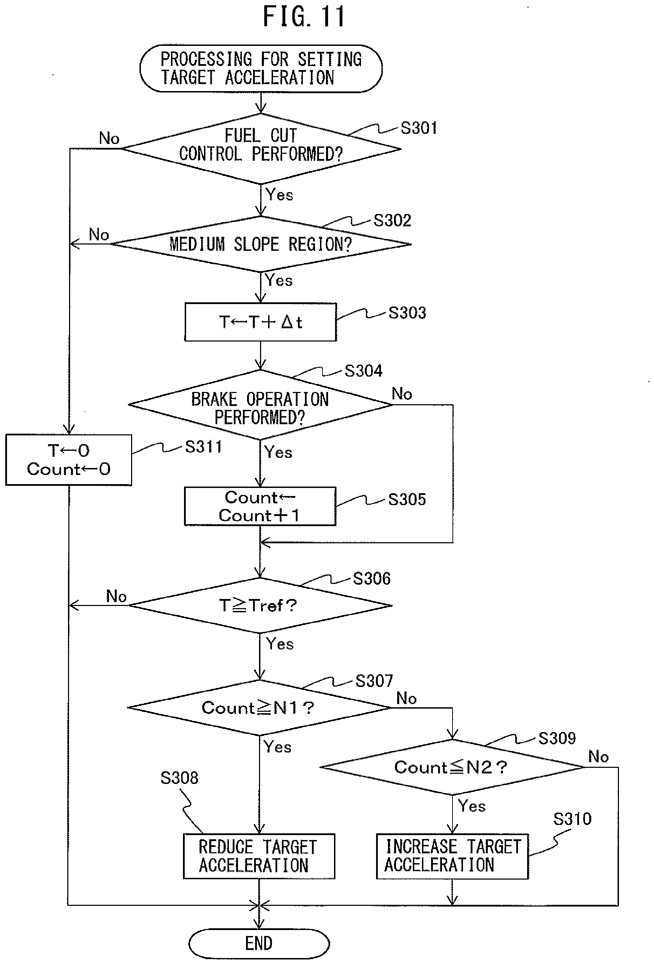

Below, referring to FIG. 11, the control for setting the target acceleration of the vehicle 1" in the third embodiment will be explained. FIG. 11 is a flow chart showing the control routine of the processing for setting the target acceleration in the third embodiment of the present invention. The present control routine is repeatedly performed by the ECU 3 at predetermined time intervals after startup of the internal combustion engine 2.

First, at step S301, the target acceleration setting part 32 judges whether the fuel cut control is being performed. If it is judged that the fuel cut control is being performed, the present control routine proceeds to step S302.

At step S302, the target acceleration setting part 32 judges whether the slope of the driven road is in the medium slope region MS. The slope of the driven road is detected by the slope detection device 41. Next, at step S303, the target acceleration setting part 32 sets the value of the elapsed time T plus an incremental time Δt as the new elapsed time T. The incremental time Δt is a value corresponding to the interval between execution of the control routine. Further, the initial value of the elapsed time T is zero.

Next, at step S304, the target acceleration setting part 32 judges whether a brake operation has been performed during the incremental time Δt. Brake operation is detected by the brake operation detection device 43. If it is judged that a brake operation has been performed, the present control routine proceeds to step S305. At step S305, the target acceleration setting part 32 sets the value of the number of operations "Count" plus 1 as the new number of operations "Count". Note that, the initial value of the number of operations "Count" is zero. On the other hand, if at step S304 it is judged that no brake operation is being performed, the present control routine skips step S305 and proceeds to step S306.

At step S306, the target acceleration setting part 32 judges whether the elapsed time T is a predetermined time Tref or more. The predetermined time Tref is determined in advance and, for example, several seconds to tens of seconds. If it is judged that the elapsed time T is less than the predetermined time Tref, the control routine is ended. On the other hand, if it is judged that the elapsed time T is the predetermined time Tref or more, the present control routine proceeds to step S307.

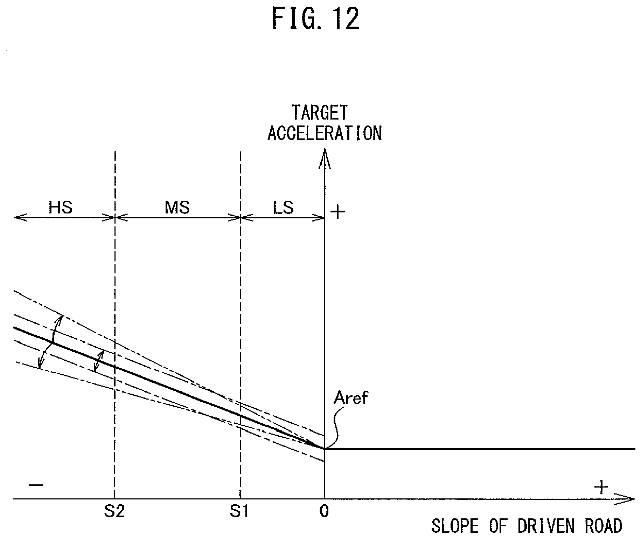

At step S307, the target acceleration setting part 32 judges whether the number of operations "Count" is the first threshold value N1 or more. if it is judged that the number of operations "Count" is the first threshold value N1 or more, the present control routine proceeds to step S308. At step S308, the target acceleration setting part 32 reduces the target acceleration of the vehicle 1". For example, the target acceleration setting part 32, as shown in FIG. 12 by the one-dot chain line, reduces the target acceleration when the slope of the driven road is negative by a predetermined amount. Further, the target acceleration setting part 32, as shown in FIG. 12 by the two-dot chain line, may reduce the rate of change of the target acceleration with respect to the slope when the slope of the driven road is negative. After step S308, the control routine is ended.

On the other hand, if at step S307 it is judged that the number of operations "Count" is less than the first threshold value, the present control routine proceeds to step S309. At step S309, the target acceleration setting part 32 judges whether the number of operations "Count" is the second threshold value N2 or less. The second threshold value N2 is smaller than the first threshold value N1. If it is judged that the number of operations "Count" is the second threshold value N2 or less, the present control routine proceeds to step S310. At step S310, the target acceleration setting part 32 increases the target acceleration of the vehicle 1". For example, the target acceleration setting part 32, as shown in FIG. 12 by the one-dot chain line, increases the target acceleration by a predetermined amount when the slope of the driven road is negative. Further, the target acceleration setting part 32, as shown in FIG. 12 by the two-dot chain line, may increase the rate of change of the target acceleration with respect to the slope when the slope of the driven road is negative. After step S310, the control routine is ended.

On the other hand, if at step S309 it is judged that the number of operations "Count" is greater than the second threshold value N2, the control routine is ended. In this case, the setting of the target acceleration is maintained.

Further, if it is judged at step S301 that the fuel cut control is not being performed or if it is judged at step S302 that the slope of the driven road is not in the medium slope region MS, the present control routine proceeds to step S311. At step S311, the elapsed time T and number of operations "Count" are reset and made zero. After step S311, the control routine is ended.

Note that, step S309 may be omitted. Further, the target acceleration setting part 32 may increases the target acceleration when the total of the time period where the brake operation is not being performed when fuel cut control is performed and the slope of the driven road is in the negative medium slope region MS reaches a first time period, and may decrease the target acceleration when the total of the time period where the brake operation is being performed when fuel cut control is performed and the slope of the driven road is in the negative medium slope region MS reaches a second time period.

### Other Embodiments

Above, preferred embodiments according to the present invention were explained, but the present invention is not limited to these embodiments and can be corrected and changed in various ways within the scope of the language of the claims. For example, the vehicle to which the control system of a vehicle is applied may be a hybrid vehicle with which an internal combustion engine and motor-generator are provided as drive units of the vehicle.

Further, the variable compression ratio mechanism can be configured in any way so long as able to change the mechanical compression ratio. For example, the variable compression ratio mechanism may be a multi-link type piston stroke mechanism using a multi-link mechanism to change the top dead center position of the piston and thereby change the mechanical compression ratio (see Japanese Patent Publication No. 2005-69027A, Japanese Patent Publication No. 2001-227367A, etc.)

Further, the variable compression ratio mechanism may be a variable length connecting rod changing the effective length of the connecting rod (distance between center of crank receiving opening receiving crank pin and center of piston pin receiving opening receiving piston pin) so as to change the mechanical compression ratio (see Japanese Patent Publication No. 2016-142137A, Japanese Patent Publication No. 2016-118180A, Japanese Patent Publication No. 2015-527518A, etc.)

### Reference Signs List

1, 1', 1". vehicle
2. internal combustion engine
3. electronic control unit (ECU)
5. combustion chamber
31. compression ratio control part
32. target acceleration setting part
41. slope detection device
42. acceleration detection device
43. brake operation detection device
A. variable compression ratio mechanism

## Claims

1. A control system of a vehicle (1, 1', 1") comprising:
a variable compression ratio mechanism (A) able to change a mechanical compression ratio of an internal combustion engine (2) provided in the vehicle (1, 1', 1");
a compression ratio control part (31) configured to control the mechanical compression ratio by the variable compression ratio mechanism (A); and
a slope detection device (41) detecting a slope of a road on which the vehicle (1, 1', 1") is driving, wherein
the compression ratio control part (31) is configured to control the mechanical compression ratio based on the slope detected by the slope detection device (41) when fuel cut control in which feed of fuel to combustion chambers (5) of the internal combustion engine (2) is stopped is being performed.

2. The control system of a vehicle (1, 1', 1") according to claim 1, wherein the compression ratio control part (31) is configured to minimize the mechanical compression ratio if the slope detected by the slope detection device (41) is positive.

3. The control system of a vehicle (1, 1', 1") according to claim 1 or 2, wherein the compression ratio control part (31) is configured to maximize the mechanical compression ratio if the slope detected by the slope detection device (41) is smaller than a predetermined negative reference value.

4. The control system of a vehicle (1') according to any one of claims 1 to 3, further comprising:
a target acceleration setting part (32) configured to set a target acceleration of the vehicle (1') based on the slope detected by the slope detection device (41); and
an acceleration detection device (42) detecting an acceleration of the vehicle (1'), wherein
the compression ratio control part (31) is configured to control the mechanical compression ratio so that when the fuel cut control is being performed, the acceleration of the vehicle (1') detected by the acceleration detection device (42) approaches the target acceleration.

5. The control system of a vehicle (1') according to claim 4, wherein the target acceleration setting part (32) is configured to increase the target acceleration the smaller the slope if the slope detected by the slope detection device (41) is negative.

6. The control system of a vehicle (1') according to claim 4 or 5, wherein the target acceleration setting part (32) is configured to set the target acceleration to a positive predetermined value if the slope detected by the slope detection device (41) is positive.

7. The control system of a vehicle (1") according to any one of claims 4 to 6,
further comprising a brake operation detection device (43) detecting a brake operation of a driver of the vehicle (1"), wherein
the target acceleration setting part (32) is configured to change the target acceleration when the slope is negative based on a brake operation detected by the brake operation detection device (43) when the fuel cut control is being performed and the slope is in a predetermined negative medium slope region.
